# FASCICULE DE BREVET EUROPEEN

(11) **EP 3 698 074 B1**
(45) Date de publication et mention de la délivrance du brevet: **02.10.2024**
(21) Numéro de dépôt: 18786785.8
(22) Date de dépôt: 18.10.2018
(51) Int. Cl.: F16K 11/076, F16K 11/085, F02M 26/00, F02M 1/00, F02M 26/70, F02M 26/71

(54) **VANNE POUR UN CIRCUIT DE FLUIDE, NOTAMMENT UN CIRCUIT DE RECIRCULATION DES GAZ D'ÉCHAPPEMENT D'UN MOTEUR**
VENTIL FÜR EINEN FLÜSSIGKEITSKREISLAUF, INSBESONDERE FÜR EINEN ABGASRÜCKFÜHRKREISLAUF
VALVE FOR A FLUID CIRCUIT, NOTABLY FOR AN ENGINE EXHAUST GAS RECIRCULATION CIRCUIT

(30) Priorité: 19.10.2017 FR 1759866
(43) Date de publication de la demande: 26.08.2020
(73) Titulaire: RENAULT S.A.S., 92100 Boulogne-Billancourt (FR)
(72) Inventeur: MOKADDEM, Mohamed, 78180 Montigny-le-Bretonneux (FR)
(74) Mandataire: Renault Group
(86) Numéro de dépôt international: PCT/EP2018/078638
(87) Numéro de publication internationale: WO 2019/077075

(56) Documents cités:
- WO-A1-03/006856
- WO-A1-2015/004497
- FR-A1- 2 827 357
- US-A- 5 690 070
- US-A1- 2015 101 693
- US-B2- 7 213 587

## Description

### DOMAINE TECHNIQUE DE L'INVENTION

L'invention concerne une vanne pour un circuit de fluide, notamment un circuit de recirculation des gaz d'échappement d'un moteur.

L'invention concerne plus particulièrement une vanne pour un circuit de fluide comportant un corps constitué d'au moins un premier carter auquel est reliée une première voie de circulation du fluide, un deuxième carter auquel sont reliées une deuxième voie de circulation du fluide et une troisième voie de circulation du fluide et dans lequel un organe de commande, monté de manière étanche, est entraîné sélectivement en rotation autour d'un axe pour occuper différentes positions afin de commander la circulation du fluide entre la première voie et les deuxième et troisième voies de circulation du fluide, comme décrit dans la revendication 1.

### ÉTAT DE LA TECHNIQUE

On connaît de l'état de la technique (voir US 7 213 587 B2) des exemples de vannes de ce type, communément appelées vanne « trois voies », qui sont utilisées pour commander la circulation d'un fluide, avec ou sans régulation.

En effet, on distingue en outre dans l'utilisation des vannes une fonction dite « de régulation » correspondant au cas où la vanne assure une régulation du débit du fluide, d'une autre fonction dite « de coupure » correspondant à une commande de la circulation du fluide avec deux positions ouverte ou fermée (soit « on/off ») et donc sans aucune régulation du débit.

Dans la présente demande, il convient de donner au terme « vanne » un sens large recouvrant l'une ou l'autre de ces fonctions.

Dans le domaine automobile, on utilise de nombreuses vannes pour commander la circulation de fluide tel que les gaz d'échappement ou encore le liquide de refroidissement, afin notamment d'assurer le fonctionnement du moteur à combustion interne.

Dans un circuit de recirculation des gaz d'échappement d'un moteur à combustion interne, on utilise par exemple une vanne dite « EGR » acronyme pour « *Exhaust Gas Recirculation* » en anglais afin d'assurer une régulation du débit d'une partie des gaz d'échappement mis en recirculation vers l'admission du moteur.

Dans un moteur comportant un circuit de recirculation des gaz d'échappement, en particulier de type haute pression (ou HP), on utilise encore parfois une vanne pour assurer une fonction de coupure, telle qu'une électrovanne ou un clapet.

Une telle vanne est en outre utilisée dans un circuit de recirculation des gaz d'échappement lorsque l'on souhaite faire de l'EHR acronyme pour « *Exhaust Heat Recovery* » en anglais.

Le principe de l'EHR est de faire passer les gaz d'échappement dans un échangeur à eau pour en récupérer les calories, plutôt qu'elles ne soient perdues en étant évacuées directement par l'échappement du moteur vers l'atmosphère.

Une vanne « EHR » commande ainsi avec un fonctionnement « on/off » la circulation des gaz d'échappement vers l'échangeur.

D'une manière générale, les besoins de gestion de la circulation des fluides (gazeux ou liquide) au sein d'un moteur à combustion interne conduisent à une augmentation du nombre de vannes.

Or, le nombre important de vannes utilisées dans un moteur à combustion interne de véhicule automobile présente des inconvénients parmi lesquels figurent notamment une augmentation : de l'encombrement général du moteur, du coût, de la consommation d'énergie pour assurer le pilotage de chaque vanne ainsi que des risques de défaillance.

On recherche par conséquent des solutions pour réduire en particulier le nombre de vannes utilisées dans un moteur.

Le but de l'invention est de proposer une nouvelle conception de vanne permettant de résoudre au moins une partie des inconvénients de l'état de la technique, tout en conservant une vanne qui soit avantageusement simple et économique à fabriquer.

### BREF RESUME DE L'INVENTION

Dans ce but, l'invention propose une vanne du type décrit précédemment, caractérisée en ce que la première voie de circulation est en permanence ouverte à la circulation du fluide et l'organe de commande est un disque comportant au moins une première partie qui, associée à un premier mode de fonctionnement de la vanne, est configurée pour ouvrir constamment la circulation du fluide à travers la deuxième voie de circulation et pour réguler, simultanément, la circulation du fluide à travers la troisième voie de circulation et une deuxième partie qui, associée à un deuxième mode de fonctionnement de la vanne, est configurée pour fermer constamment la circulation du fluide à travers la deuxième voie de circulation et pour réguler, simultanément, la circulation du fluide à travers la troisième voie de circulation, comme décrit dans la revendication 1.

Grâce à l'invention, il est possible d'offrir deux modes de fonctionnement différents et cela avec une seule vanne, un seul moteur d'entraînement associé à l'organe de commande monté mobile en rotation.

Par conséquent, la vanne selon l'invention permet notamment de réduire tant l'encombrement en proposant une vanne compacte multifonction que le coût en réduisant le nombre de vannes de deux à une seule pour assurer les mêmes fonctions.

Avantageusement, la vanne selon l'invention est susceptible de remplacer respectivement une vanne EHR et une vanne EGR dans un circuit de recirculation des gaz d'échappement d'un moteur thermique.

Avantageusement, la vanne comporte des moyens d'entraînement de l'organe de commande constitués par un unique moteur électrique grâce à quoi on réduit la consommation d'énergie requise par le moteur pour commander la vanne.

Selon d'autres caractéristiques de l'invention :
- la première partie est formée par une moitié du disque et la deuxième partie formée par l'autre moitié du disque ;
- le disque est entraîné en rotation par des moyens d'entraînement pour amener sélectivement, dans une disposition active définie par rapport à l'agencement des deuxième et troisième voies de circulation du fluide, ladite première partie du disque lorsque la vanne est utilisée dans le premier mode de fonctionnement ou ladite deuxième partie du disque lorsque la vanne est utilisée dans le deuxième mode de fonctionnement ;
- la première partie est formée par une moitié du disque et la deuxième partie formée par l'autre moitié du disque ;
- le changement de mode de fonctionnement de la vanne, entre le premier mode de fonctionnement et le deuxième mode de fonctionnement, est obtenu par une rotation de 180° du disque afin de positionner sélectivement dans ladite disposition active la première moitié ou la deuxième moitié du disque ;
- les moyens d'entraînement en rotation de l'organe de commande sont constitués par un moteur électrique, préférentiellement de type pas à pas ;
- la première partie et la deuxième partie du disque comportent chacune au moins un secteur de circulation et un secteur d'obturation ;
- la première partie du disque comporte un secteur de circulation et un secteur d'obturation respectivement configurés pour commander la circulation du fluide lorsque, dans le premier mode de fonctionnement de la vanne, la première partie est en disposition active ;
- le secteur de circulation de la première partie s'étend angulairement suivant un angle (α) dont la valeur est déterminée pour ouvrir totalement la circulation du fluide à travers la deuxième voie lorsque le secteur d'obturation complémentaire de la première partie est entraîné en rotation entre au moins une position extrême de fermeture et une position extrême d'ouverture pour réguler la circulation du fluide dans la troisième voie ;
- le secteur d'obturation de la première partie, complémentaire du secteur de circulation, est configuré pour réguler la circulation du fluide à travers la troisième voie entre au moins une position extrême de fermeture dans laquelle ledit secteur d'obturation est agencé radialement en vis-à-vis de la troisième voie pour fermer la circulation du fluide à travers la troisième voie, et une position extrême d'ouverture dans laquelle ledit secteur d'obturation est agencé angulairement pour positionner le secteur de circulation adjacent radialement en vis-à-vis de la troisième voie afin d'ouvrir complètement la circulation du fluide à travers ladite troisième voie ;
- la valeur de l'angle (α) du secteur de circulation de la première partie du disque est supérieur à l'angle compris entre la deuxième voie et la troisième voie de manière à maintenir en permanence la deuxième voie de circulation ouverte lorsque le secteur d'obturation de la première partie occupant la disposition active est déplacé entre lesdites positions extrêmes de fermeture et d'ouverture pour réguler la circulation du fluide à travers la troisième voie ;
- la deuxième partie du disque comporte un secteur de circulation interposés entre un premier secteur d'obturation et un deuxième secteur d'obturation, lesdits secteurs de circulation et d'obturation étant respectivement configurés pour commander la circulation du fluide lorsque, dans le deuxième mode de fonctionnement de la vanne, la deuxième partie est en disposition active ;
- le premier secteur d'obturation est configuré pour fermer la circulation du fluide à travers la deuxième voie lorsque le deuxième secteur d'obturation est entraîné en rotation entre une position extrême de fermeture et une position extrême d'ouverture pour réguler la circulation du fluide dans la troisième voie ;
- le deuxième secteur d'obturation est configuré pour réguler la circulation du fluide à travers la troisième voie entre au moins une position extrême de fermeture dans laquelle ledit deuxième secteur d'obturation est agencé radialement en vis-à-vis de la troisième voie afin de fermer la circulation du fluide à travers ladite troisième voie, et une position extrême d'ouverture dans laquelle ledit deuxième secteur d'obturation est décalé angulairement pour positionner le secteur de circulation radialement adjacent radialement en vis-à-vis de la troisième voie afin d'ouvrir complètement la circulation du fluide à travers la troisième voie ;
- le secteur de circulation de la deuxième partie du disque s'étend suivant un angle (β) qui est déterminé en fonction de la troisième voie V3, en particulier d'un orifice associée à la troisième voie ;
- la première voie de circulation est une entrée et en ce que les deuxième et troisième voies de circulation du fluide sont des sorties ;
- la vanne comporte des moyens d'étanchéité disposés entre une partie du deuxième carter et une partie du disque située en vis-à-vis ;
- l'étanchéité est assurée par un contact latéral ajusté entre une surface interne du deuxième carter et une surface externe du disque.

L'invention propose également un circuit de recirculation des gaz d'échappement d'un moteur à combustion interne de véhicule automobile comportant au moins une conduite dont une extrémité est reliée à un circuit d'échappement du moteur et dont une autre extrémité est reliée à un circuit d'admission du moteur, caractérisé en ce que ledit circuit comporte une vanne selon les enseignements de l'invention.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :

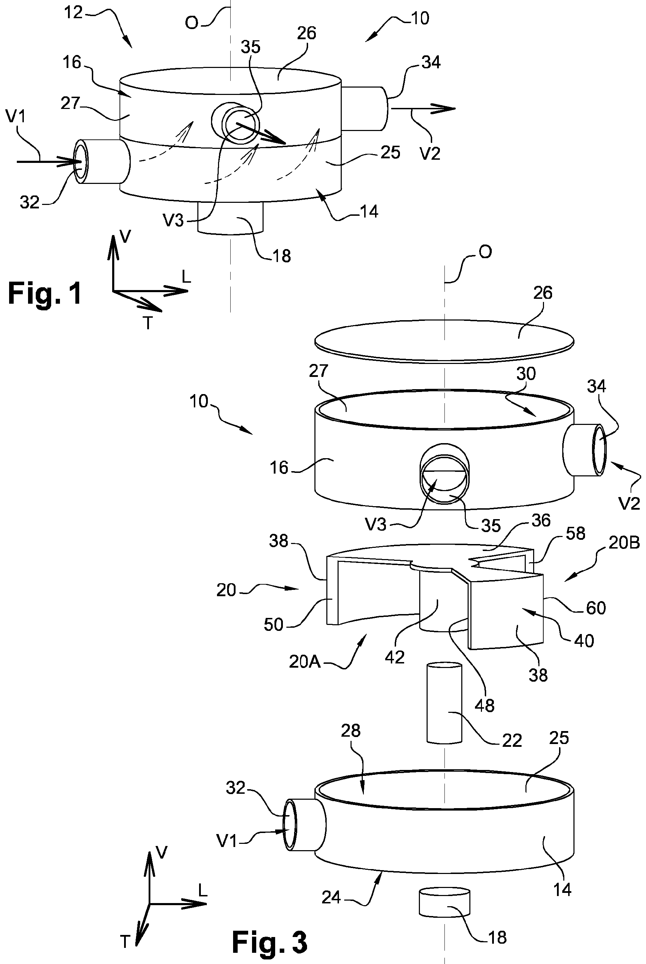

- la figure 1 est une vue en perspective qui représente un mode de réalisation d'une vanne selon l'invention et qui illustre le corps de la vanne comportant un carter inférieur auquel est reliée la première voie et un carter supérieur auquel sont reliées les deuxième et troisième voies ;

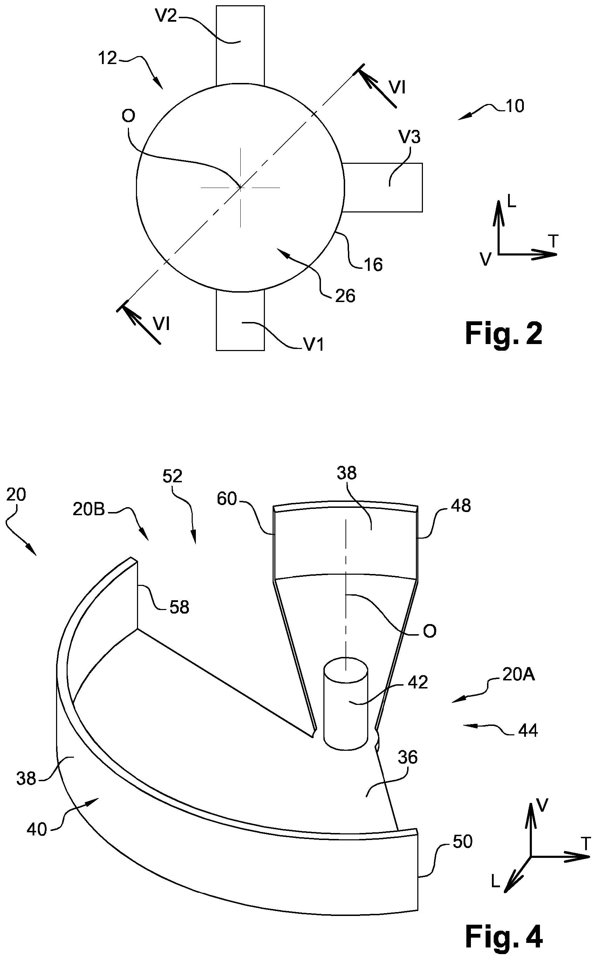

- la figure 2 est une vue de dessus qui représente la vanne selon la figure 1 et qui illustre l'agencement des deuxième et troisième voies ;
- la figure 3 est une vue en perspective qui représente en éclaté une vanne selon la figure 1 et qui illustre en outre les trois voies reliées aux carters inférieur et supérieur formant le corps, l'organe de commande constitué par le disque et le moteur d'entraînement en rotation du disque autour de l'axe central ;

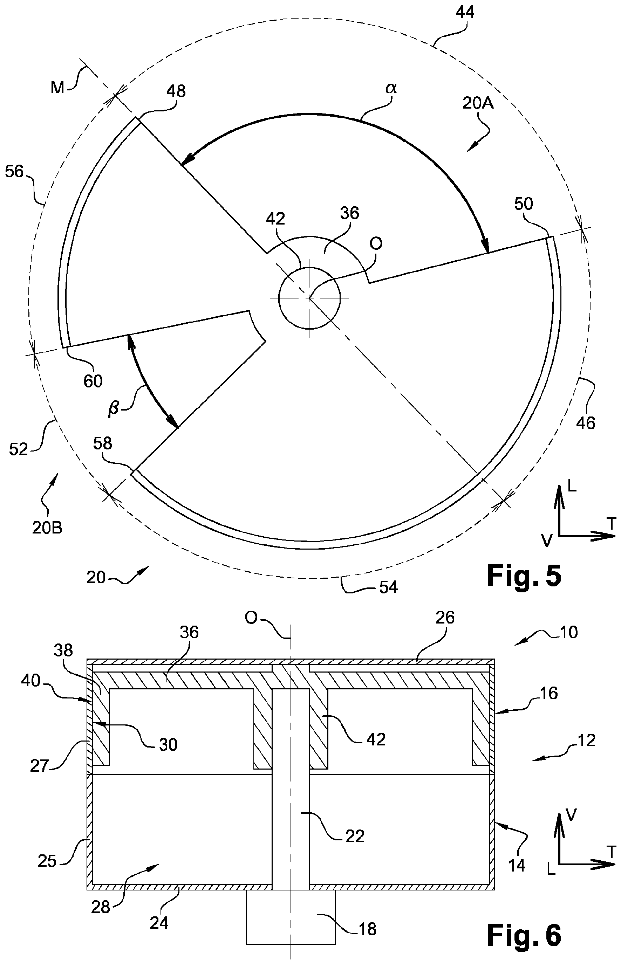

- les figures 4 et 5 sont respectivement une vue en perspective et une vue de dessous qui représentent un exemple de réalisation du disque formant l'organe de commande de la vanne et qui illustrent les deux moitiés du disque comportant chacune au moins un secteur d'obturation et un secteur de circulation lesquels sont conformés pour ouvrir ou fermer et réguler respectivement les deuxième et troisième voies selon le mode de fonctionnement associé ;
- la figure 6 est une vue en coupe selon un plan VI-VI d'orientation verticale représenté sur la figure 2, qui représente la vanne selon le mode de réalisation de la figure 1 et qui illustre en particulier le disque (selon l'exemple de réalisation des figures 4 et 5) qui est agencé dans le carter supérieur comportant les deuxième et troisième voies et destiné à être entraîné sélectivement en rotation par l'intermédiaire d'un arbre central du moteur ;

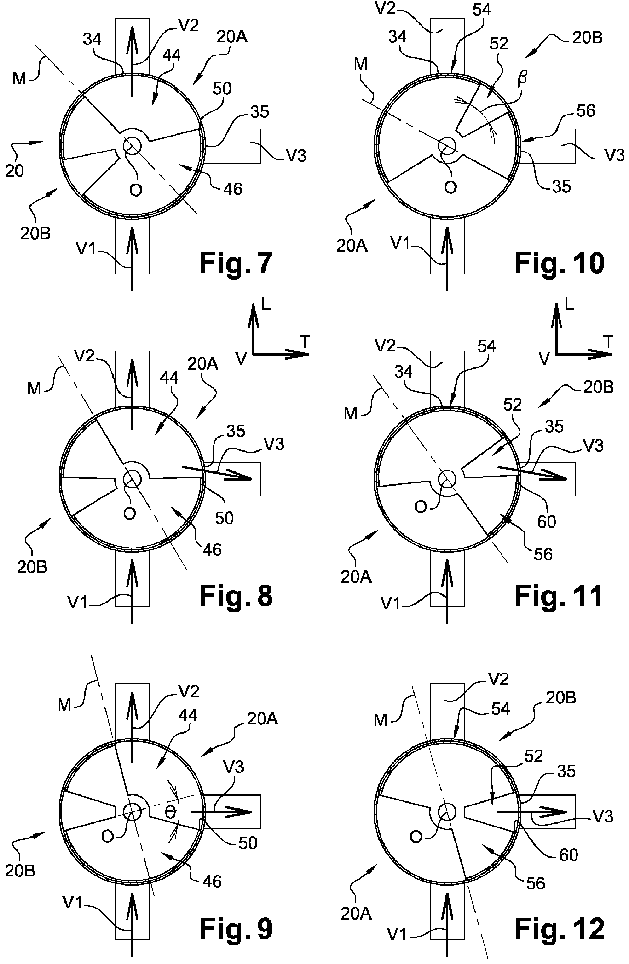

- les figures 7 à 9 sont des vues en coupe selon un plan horizontal passant au niveau de la jonction des carters inférieur et supérieur formant le corps de la vanne, lesdites vues par en dessous de la vanne représentent en disposition active la première moitié du disque qui est associée au premier mode de fonctionnement dans lequel la deuxième voie est constamment ouverte et illustrent le secteur d'obturation de la première moitié du disque respectivement en position extrême de fermeture de la troisième voie, dans une des positions intermédiaires de régulation de la troisième voie et en position extrême d'ouverture totale de la troisième voie ;
- les figures 10 à 12 sont des vues en coupe analogues aux figures 7 à 9 qui représentent, en disposition active, la deuxième moitié du disque qui est associée au deuxième mode de fonctionnement dans lequel la deuxième voie est constamment fermée par le premier secteur d'obturation et illustrent le deuxième secteur d'obturation de la deuxième moitié du disque qui est associé à la troisième voie respectivement en position extrême de fermeture, dans une des positions intermédiaires de régulation et en position extrême d'ouverture totale de la troisième voie ;

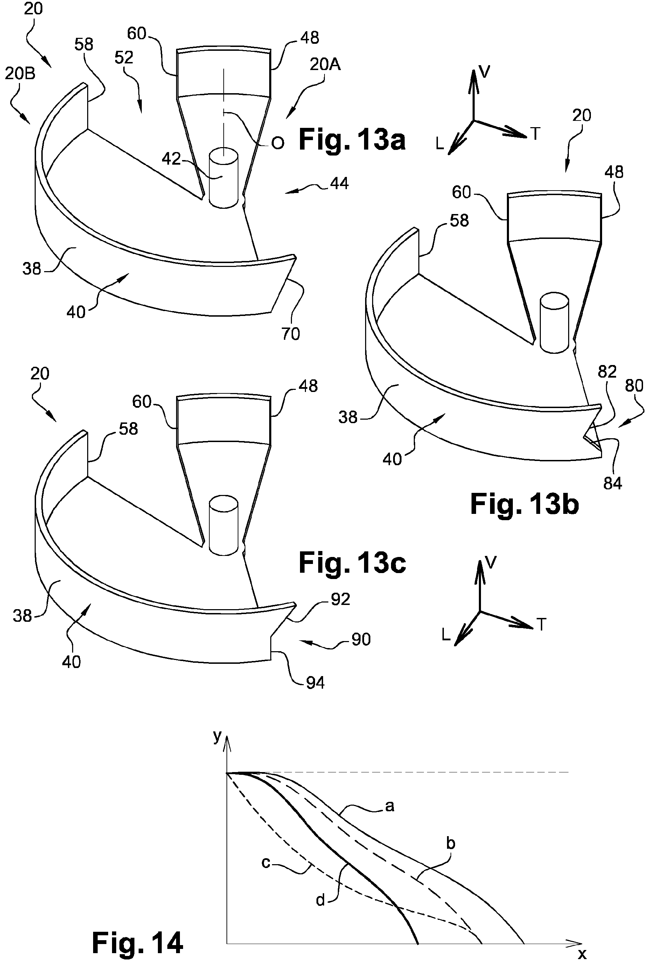

- les figures 13 a, b et c sont des vues en perspective analogues à la figure 4 qui représentent d'autres exemples de profil de l'arête de régulation d'un bord d'un secteur d'obturation de l'une des moitiés du disque ;
- la figure 14 est un graphique qui représente sur l'axe horizontal des abscisses la section de passage du fluide et sur l'axe vertical des ordonnées l'angle de rotation du disque et qui illustre par les différentes courbes la variation obtenue en modifiant le profil de l'arête de régulation du bord d'un secteur d'obturation, lesdites courbes a, b et c correspondant respectivement au profil de l'arête représentée sur les figures 13 a, b, c et pour la courbe d à celui de la figure 4.

### DESCRIPTION DETAILLEE DES FIGURES

Dans la suite de la description, on adoptera à titre non limitatif les orientations longitudinale, verticale et transversale en référence au trièdre (L, V, T) représenté sur les figures.

Par convention, les orientations longitudinale et transversale sont déterminées de manière fixe par rapport au corps de la vanne de sorte que la position du disque de commande de la vanne est sans incidence sur lesdites orientations. L'orientation verticale est utilisée sans référence aucune à la gravité terrestre.

On utilisera également à titre non limitatif les termes « avant » et « arrière » en référence à l'orientation longitudinale, ainsi que « supérieur » et « inférieur » ou « haut » et « bas » en référence à l'orientation verticale et enfin « gauche » et « droite » en référence à l'orientation transversale.

Les termes « intérieur » ou « extérieur » et « interne » ou « externe » sont respectivement utilisés par rapport au corps de la vanne d'une manière générale et tout particulièrement par rapport aux carters le constituant pour désigner un élément situé soit dedans, soit en dehors dudit corps de vanne.

On a représenté sur les figures 1 et suivantes un mode de réalisation d'une vanne 10 selon l'invention destinée à être utilisée dans un circuit de fluide.

La vanne 10 est notamment, mais non exclusivement, destinée à être utilisée dans un circuit de recirculation des gaz d'échappement d'un moteur à combustion interne de véhicule automobile.

Dans cette application, le fluide contrôlé par la vanne 10 est alors constitué de gaz d'échappement qui présentent en outre des températures élevées.

La vanne 10 est une vanne du type « trois voies ».

La vanne 10 comporte trois voies de circulation du fluide, respectivement une première voie V1, une deuxième voie V2 et une troisième voie V3.

La vanne 10 comporte un corps 12 qui est réalisé en au moins deux parties. Le corps 12 comporte au moins un premier carter 14, dit carter inférieur, et d'un deuxième carter 16, dit carter supérieur.

Tel qu'indiqué précédemment, le trièdre (L, V, T) représenté sur la figure 1 est utilisé de manière non limitative pour faciliter la compréhension de la description, l'orientation verticale n'étant en particulier pas liée à la gravité terrestre.

La vanne 10 pourrait ainsi être retournée sans que cela n'en affecte l'agencement relatif des différents éléments ou encore son fonctionnement.

Le carter 14 inférieur et le carter 16 supérieur présentent une forme identique et complémentaire, ici cylindrique, lesdits carters 14 et 16 étant assemblés entre eux de manière étanche.

La vanne 10 comporte des moyens 18 d'entraînement en rotation d'un organe 20 de commande, autour d'un axe O de rotation qui s'étend verticalement, ledit organe 20 de commande est plus particulièrement visible sur l'éclaté de la figure 3 ainsi que sur les figures 4 et 5.

L'organe 20 de commande est monté de manière étanche dans le corps 12. De préférence, l'organe 20 de commande est ici logé à l'intérieur du carter 16 supérieur.

L'organe 20 de commande est apte à être entraîné en rotation afin d'occuper différentes positions angulaires autour de l'axe O pour commander la circulation du fluide à travers les voies de la vanne 10.

L'organe 20 de commande est constitué par une pièce cylindrique présentant globalement la forme d'un disque (en variante d'un palet).

Les moyens 18 d'entraînement sont constitués par un moteur électrique, avantageusement de type pas à pas.

Le moteur 18 comporte un arbre 22 d'entraînement qui, s'étendant verticalement suivant l'axe O de rotation, est lié en rotation au disque 20.

De préférence, le moteur 18 est agencé à l'extérieur du corps 12 de la vanne, ici en dessous du carter 14 inférieur.

Le carter 14 inférieur comporte une paroi 24 inférieure, plane et de forme circulaire, à partir de la périphérie radiale de laquelle s'étend verticalement vers le haut un bord 25.

L'arbre 22 traverse la paroi 24 inférieure du carter 14 et s'étend verticalement au centre de la vanne 10 déterminant l'axe O de rotation du disque 20. Des moyens d'étanchéité (non représentés) sont prévus entre l'arbre 22 et le carter 14 inférieur du corps 12.

Le carter 16 supérieur comporte une paroi 26 supérieure, plane et de forme circulaire, à partir de la périphérie radiale de laquelle s'étend verticalement vers le bas un bord 27.

Sur l'éclaté de la figure 3, le carter 16 supérieur est représentée en deux pièces toutefois la paroi 26 supérieure est préférentiellement réalisée venue de matière, en une seule pièce avec le carter 16 supérieur.

Le carter 14 inférieur délimite intérieurement une chambre 28 destinée à être traversée par le fluide, la chambre 28 comportant en son centre l'arbre 22 d'entraînement du disque 20.

Le bord 27 du carter 16 supérieur comporte à l'intérieur une surface 30 interne qui est destinée à coopérer de manière étanche avec le disque 20.

Tel qu'indiqué précédemment, la vanne 10 comporte trois voies V1, V2 et V3 de circulation du fluide.

La première voie V1 de circulation du fluide est reliée au carter 14 inférieur.

Dans le mode de réalisation de la figure 1, la première voie V1 de la vanne 10 se raccorde radialement au niveau du bord 25 du carter 14 inférieur, soit orthogonalement à l'axe O de rotation.

La première voie V1 de la vanne 10 comporte un orifice 32 ménagé dans le bord 25 qui assure la communication avec la chambre 28 du carter 14 inférieur.

De préférence, l'orifice 32 associé à la première voie V1 présente une section circulaire.

La première voie V1 est ici toujours passante, ouverte à la circulation du fluide à travers l'orifice 32 communiquant avec la chambre 28 délimitée par le carter 14 inférieur.

Un tel agencement de la première voie V1 relativement au carter 14 inférieur n'est cependant pas limitatif et d'autres agencements pourraient être envisagés en fonction notamment des contraintes d'implantation de la vanne 10 dans un environnement déterminé par l'application.

En variante non représentée, la première voie V1 de la vanne 10 pourrait ainsi se raccorder tangentiellement au bord 25 du carter 14 inférieur ou encore verticalement par en dessous, à travers la paroi 24.

La première voie V1 constitue par exemple une entrée par l'intermédiaire de laquelle le fluide est admis à l'intérieur de la vanne 10 avant d'en sortir par la deuxième voie V2 et/ou la troisième voie V3 qui en constituent alors les sorties.

Le sens de circulation du fluide a été illustré sur la figure 1 par des flèches au niveau des voies de la vanne 10, la vanne 10 assurant sélectivement dans ce cas une distribution du fluide entre lesdites deuxième et troisième voies V2 et V3 de sortie.

Un tel sens de circulation du fluide à travers la vanne 10 n'est toutefois nullement limitatif.

En variante, le sens de circulation du fluide est inversé de sorte que les deuxième et troisième voies V2 et V3 constituent des entrées de fluide et la première voie V1 une sortie de fluide.

Dans une telle variante, la vanne 10 est alors susceptible d'assurer un rôle de « mélangeur » en admettant sélectivement le fluide provenant respectivement desdites deuxième et troisième voies V2 et V3 d'entrée de fluide.

Les deuxième et troisième voies V2 et V3 de circulation du fluide sont reliées au carter 16 supérieur.

Dans le mode de réalisation, la deuxième voie V2 et la troisième voie V3 de circulation du fluide se raccordent radialement au bord 27 du carter 16 supérieur, soit orthogonalement à l'axe O de rotation.

En variante non représentée, l'agencement des deuxième voie V2 et troisième voie V3 de circulation du fluide pourrait être différent.

A titre d'exemple non limitatif, la deuxième voie V2 et la troisième voie V3 de circulation du fluide sont raccordées au niveau de la paroi 26 supérieure du carter 16 supérieur, l'étanchéité étant alors réalisée entre la face interne de la paroi 26 supérieure et la face externe verticalement en vis-à-vis de l'organe 20 de commande.

La deuxième voie V2 et la troisième voie V3 de la vanne 10 communiquent respectivement, avec l'intérieur du carter 16 supérieur, par un orifice 34 et par un orifice 35 ménagés dans le bord 27.

De préférence, les orifices 34 et 35 présentent une section circulaire. La section de passage des orifices 34 et 35 est ici préférentiellement identique.

La deuxième voie V2 et la troisième voie V3 de la vanne 10 débouchent donc par les orifices 34 et 35 dans la surface 30 interne du carter 16 supérieur et la communication fluidique avec la chambre 28 du carter 14 inférieur communiquant avec la première voie V1 est établie sélectivement en fonction de la position angulaire occupée par le disque 20 de commande interposé entre les voies.

Dans le mode de réalisation, la deuxième voie V2 est agencée dans un même plan horizontal que la troisième voie V3 de circulation de fluide, lesdites voies V2 et V3 sont donc situées verticalement à la même hauteur. Lesdites voies V2 et V3 sont reliées fluidiquement au même carter 16 supérieur et destinées à être commandées ensemble par l'intermédiaire du disque 20.

De préférence, la deuxième voie V2 est agencée orthogonalement à la troisième voie V3 de circulation de fluide de sorte que lesdites voies V2 et V3 présentent entre elles un angle de 90°.

On a représenté sur les figures 4 et 5, un exemple de réalisation du disque 20 formant l'organe de commande de la vanne 10.

Selon cet exemple, le disque 20 est une pièce creuse présentant en coupe par un plan vertical la forme d'un « U » inversé.

Avantageusement, un tel disque 20 permet de limiter le poids et ce faisant l'inertie de l'organe de commande, ainsi que le coût de fabrication en réduisant notamment la quantité de matière.

Tel qu'illustré sur les figures 4 et 5, le disque 20 comporte une paroi 36 qui s'étend horizontalement dans le plan (L, T) et un bord 38 cylindrique qui, à partir de la périphérie radiale externe de la paroi 36, s'étend verticalement vers le bas.

Le bord 38 cylindrique du disque 20 comporte une surface 40 externe qui est destinée à coopérer de manière étanche avec la surface 30 interne du carter 16 supérieur.

Avantageusement, l'étanchéité est réalisée par un contact latéral ajusté entre la surface 40 externe du disque 20 et la surface 30 interne du carter 16 supérieur du corps 12 de la vanne 10.

De tels moyens d'étanchéité de la vanne 10 ne constituent qu'un exemple non limitatif qui est notamment préféré dans le cas d'un fluide constitué par des gaz d'échappement.

Le disque 20 étant une pièce mobile par rapport au carter 16 supérieur, un traitement de surface est avantageusement appliqué pour réduire les frottements de manière à favoriser le glissement entre les surfaces 30 et 40 assurant l'étanchéité.

Avantageusement, un tel traitement de surface permet de réduire l'effort à fournir par le moteur 18 pour entrainer en rotation le disque 20.

Grâce au traitement de surface, on évite ainsi d'avoir à sur-dimensionner le moteur 18 d'entrainement du disque 20 de commande, au bénéfice d'un gain d'encombrement et de coût.

Dans le cas de l'application précitée, c'est-à-dire de l'utilisation de la vanne 10 dans un circuit de recirculation de gaz d'échappement d'un moteur à combustion interne, le matériau employé pour la fabrication de l'organe 20 de commande est choisi en conséquence.

En effet, on rappelle que les gaz d'échappement présentent des températures élevées qui peuvent par exemple atteindre une valeur de 750°C.

De préférence, l'organe 20 de commande est fabriqué en acier, par exemple 304 X5CrNil8-10 - poli grain 320, ou encore en inox.

Avantageusement, le même matériau est utilisé pour les pièces assurant l'étanchéité par contact ajusté afin de prévenir les risques de dilatation différentielle, soit ici pour l'organe 20 de commande formé par le disque et le carter 16 supérieur.

Tel qu'illustré sur la coupe de la figure 6, le disque 20 comporte centralement un tube 42 qui s'étend verticalement vers le bas à partir de la face interne de la paroi 36 et à l'intérieur duquel est reçue l'extrémité libre de l'arbre 22 d'entraînement en rotation lié au moteur 18.

Le tube 42 du disque et l'arbre 22 sont liés en rotation sans jeu, par exemple par engrènement ou tout autre moyen de liaison en rotation équivalent.

Dans le mode de réalisation et tel qu'illustré sur les figures 4 et 5, le disque 20 est logé à l'intérieur du carter 16 supérieur auquel sont reliées les deuxième et troisième voies V2 et V3 de sortie du fluide tandis que la chambre 28 occupe le volume intérieur du carter 14 inférieur auquel est reliée la première voie V1 d'entrée du fluide.

Selon l'invention, la première voie V1 de circulation est en permanence ouverte à la circulation du fluide et l'organe 20 de commande est configuré pour ouvrir ou fermer la circulation du fluide à travers la deuxième voie V2 de circulation et pour réguler simultanément la circulation du fluide à travers la troisième voie V3 de circulation.

Avantageusement, la deuxième voie V2 de circulation de fluide et la troisième voie V3 de circulation du fluide sont contrôlées indépendamment l'une de l'autre grâce à quoi la vanne 10 permet avec une unique vanne et un seul moteur 18 d'assurer les fonctions de régulation assurées jusqu'alors par deux vannes.

Dans l'exemple de réalisation qui va être décrit en détail ci-après, le disque 20 est configuré pour assurer une régulation du débit de fluide à travers la troisième voie V3 de circulation, avec un débit compris respectivement entre 0% (position fermée) et 100% (position ouverte), et pour commander - simultanément à la régulation de la troisième voie V3 - la circulation du fluide à travers la deuxième voie V2 qui est susceptible d'être soit ouverte, soit fermée.

Dans l'exemple, le disque 20 de la vanne 10 assure ainsi une fonction de régulation de la troisième voie V3 et une fonction de coupure (« on/off ») de la deuxième voie V2 de circulation du fluide.

Le présent exemple n'est toutefois nullement limitatif et l'association entre l'une des voies V2, V3 et l'une des fonctions de régulation et de coupure pourrait être inversée. Ainsi, le disque 20 de la vanne 10 pourrait assurer une fonction de régulation de la deuxième voie V2 et une fonction de coupure de la troisième voie V3 de circulation du fluide.

Chacune de ces fonctions de régulation et de coupure réalisées par le disque 20 a pour but de commander la circulation du fluide à travers les voies indépendamment du sens de circulation du fluide à travers celles-ci, c'est-à-dire que les voies V2 et V3 soient des voies d'entrée ou, selon l'exemple, de sortie du fluide.

Pour réaliser simultanément chacune de ces deux fonctions, fonction de régulation de l'une desdites voies V2, V3 d'une part et fonction de coupure sur l'autre desdites voies V2, V3 d'autre part, le disque 20 est circonférentiellement partitionné.

Le partitionnement du disque 20 est déterminé par l'agencement sur le carter 16 de la deuxième voie V2 par rapport à la troisième voie V3, en particulier par l'angle les séparant afin de pouvoir ouvrir ou fermer l'une et réguler simultanément l'autre.

Le partitionnement du disque 20 est également déterminé par la fonction de régulation ou de coupure associée à chacune desdites voies V2, V3 de circulation du fluide.

Pour permettre d'établir sélectivement une circulation du fluide entre la première voie V1 toujours passante et les deuxième et/ou troisième voies V2, V3 en fonction de la position angulaire occupée par le disque, le disque 20 est partitionné circonférentiellement en différents secteurs afin de supprimer localement l'étanchéité résultant de la coopération entre la surface 30 interne du carter 16 supérieur et la surface 40 externe du bord 38 du disque 20.

On a représenté sur la figure 1 par des flèches en pointillé la circulation ascendante du fluide entre la surface 30 interne du carter 16 supérieur et la surface 40 externe du bord 38 du disque 20, depuis la chambre 28 du carter 14 inférieur vers le carter 16 supérieur comportant le disque 20.

Le partitionnement du disque 20 sur l'ensemble de sa circonférence conduit à créer angulairement soit un secteur de circulation correspondant à une zone permettant un passage du fluide, soit un secteur d'obturation correspondant à une zone dans laquelle l'étanchéité interdit au contraire le passage du fluide.

Dans l'exemple de réalisation du disque 20, l'étanchéité est assurée directement par la surface 40 externe du bord 38 du disque 20.

Pour obtenir ce partitionnement du disque 20 et créer un ou des secteurs de circulation, on procède à une découpe sélective d'au moins un tronçon du bord 38 du disque 20.

On obtient ainsi un secteur de circulation qui, centré sur l'axe O, s'étend circonférentiellement sur un angle donné. Chaque secteur de circulation détermine de manière complémentaire au moins un secteur d'obturation qui lui est adjacent.

Le fluide est susceptible de passer au niveau d'un tel secteur de circulation obtenu par découpe du bord 38, ledit fluide passant radialement entre la surface 30 interne du carter 16 supérieur et ledit secteur de circulation du disque 20.

L'absence de surface 40 externe résultant de la découpe du bord 38 a pour conséquence d'interrompre l'étanchéité réalisée radialement par le contact latéral ajusté avec la surface 30 interne du carter 16 supérieur.

Le fluide est susceptible de circuler à travers chaque secteur de circulation vers au moins l'une des voies (sous réserve de son ouverture totale ou partielle), soit ici de remonter depuis la chambre 28 alimentée en permanence par la première voie V1 vers l'une et/ou l'autre desdites deuxième et troisième voies V2 et V3 se trouvant radialement en coïncidence avec ledit secteur de circulation.

En effet, la circulation du fluide est établie sélectivement en fonction de la position angulaire du disque 20, dudit secteur de circulation relativement aux deuxième et troisième voies V2 et V3.

La circulation n'est effectivement établie que lorsqu'un secteur de circulation (correspondant au passage crée par l'enlèvement d'un tronçon du bord 38) se trouve totalement ou partiellement en coïncidence avec au moins l'un des orifices 34, 35 associés aux deuxième et troisième voies V2 et V3.

Dans le cas contraire, cela signifie que c'est un secteur d'obturation formé par un tronçon du bord 38 qui se trouve radialement en coïncidence avec l'un au moins desdits orifices 34, 35 des deuxième et troisième voies V2 et V3 de sorte que la circulation du fluide est alors interrompue.

En effet, l'étanchéité est alors maintenue autour de l'orifice 34 et/ou 35 par la coopération de la surface 40 externe du bord 38 avec la surface 30 interne du carter 16 supérieur située radialement en vis-à-vis.

Le principe général de fonctionnement du disque 20 partitionné ayant été expliqué, on décrira ci-après plus en détail la découpe du disque 20 pour obtenir alternativement un secteur de circulation ou un secteur d'obturation, présentant respectivement un angle déterminé.

Dans l'exemple de réalisation du disque 20 représenté sur les figures 4 et 5, un secteur de circulation est obtenu en découpant non seulement le bord 38 vertical du disque mais également, dans le prolongement en direction de l'axe O, une partie de la paroi 36 horizontale.

Un tel disque 20 présente plusieurs avantages au nombre desquels figurent une réduction du poids et de l'inertie ainsi que des pertes de charge.

Avantageusement, le prolongement de la découpe dans la paroi 36 facilite également la fabrication du disque 20 partitionné.

Toutefois, cela peut conduire à fragiliser le disque 20 en réduisant sa tenue mécanique de sorte que la réalisation des secteurs de circulation sera notamment déterminée en fonction de l'application, des matériaux, des caractéristiques géométriques du ou des secteurs de circulation.

En variante non représentée, la découpe pour obtenir un secteur de circulation est réalisée uniquement dans le bord 38 du disque 20. Par comparaison avec l'exemple illustré sur les figures 4 et 5, la découpe ne se prolonge alors pas dans la paroi 36 et seul un tronçon du bord 38 est enlevé par l'opération de découpe.

Dans un disque 20 selon cette variante, les avantages de réduction du poids et de l'inertie ainsi que celle des pertes de charge sont conservés. Par comparaison, le disque 20 présente un plus grande solidité au détriment d'une fabrication pouvant s'avérer plus difficile, la découpe du seul bord 38 pouvant être moins aisée selon le procédé de fabrication du disque.

Bien entendu, un tel disque 20 creux ne constitue qu'un exemple de réalisation de l'organe de commande de la vanne 10.

En variante non représentée, l'organe 20 de commande est un disque plein, autrement dit présente sensiblement la forme d'un palet.

De préférence, le tube 42 est alors supprimé et l'arbre 22 d'entrainement reçu dans un trou central du palet. Le trou est de préférence un trou borgne percé verticalement suivant l'axe O dans l'épaisseur du palet à partir de sa face inférieure orientée vers la chambre 28.

Par comparaison avec le disque 20 selon l'exemple des figures 4 et 5, un organe de commande formé par un tel palet a en outre pour inconvénient de présenter un poids supérieur, ce qui conduit à en augmenter l'inertie.

Une telle variante de réalisation de l'organe 20 de commande sous la forme d'un palet est susceptible d'offrir une meilleure tenue mécanique et une facilité de fabrication.

Comme cela sera décrit ultérieurement en référence aux figures 7 à 9 ainsi qu'aux figures 10 à 12, la commande de la circulation du fluide est obtenue en contrôlant la position angulaire du disque 20 autour de l'axe O de rotation pour amener sélectivement l'un des secteurs, de circulation ou d'obturation, radialement en vis-à-vis d'une des deuxième et/ou troisième voies V2, V3 de circulation du fluide.

Dans le mode de réalisation, le partitionnement du disque 20 de la vanne 10 en secteurs de circulation et secteurs d'obturation est déterminé de manière à ouvrir ou fermer la circulation du fluide à travers la deuxième voie V2 de circulation et à réguler simultanément la circulation du fluide à travers la troisième voie V3 de circulation.

En effet, le disque 20 est configuré pour permettre de commander indépendamment la deuxième voie V2 et la troisième voie V3 de circulation du fluide.

C'est la raison pour laquelle la vanne 10 présente respectivement un premier mode de fonctionnement et un deuxième mode de fonctionnement.

Le premier mode de fonctionnement de la vanne 10 correspond à un mode dans lequel la deuxième voie V2 de circulation est maintenue totalement ouverte à la circulation du fluide pendant que, simultanément, la circulation du fluide à travers la troisième voie V3 de circulation est régulée.

Le deuxième mode de fonctionnement de la vanne 10 correspond à un mode dans lequel la deuxième voie V2 de circulation est maintenue fermée à la circulation du fluide pendant que, simultanément, la circulation du fluide à travers la troisième voie V3 de circulation est régulée.

Par comparaison, le premier mode de fonctionnement est un mode dans lequel la deuxième voie V2 de circulation est en permanence ouverte tandis que le deuxième mode de fonctionnement est un mode dans lequel la deuxième voie de circulation est en permanence fermée.

Selon un exemple d'application, la deuxième voie V2 est reliée à un échangeur thermique afin de faire de l'EHR (« *Exhaust Heat Recovery* ») tandis que la troisième voie V3 est reliée à l'admission du moteur pour faire de l'EGR (« *Exhaust Gas Recirculation* »).

La première voie V1 est alors reliée à l'échappement du moteur pour mettre en recirculation au moins une partie des gaz d'échappement.

Dans chacun de ces deux modes de fonctionnement, la circulation du fluide à travers la troisième voie V3 de circulation est régulée, simultanément à l'ouverture ou la fermeture de la deuxième voie V2, en pilotant la position angulaire du disque 20 autour de l'axe O de rotation.

Dans le premier mode de fonctionnement, la deuxième voie V2 de circulation est constamment ouverte quelle que soit la position angulaire occupée par le disque 20 pour réguler la troisième voie V3.

De la même manière pour le deuxième mode de fonctionnement, la deuxième voie V2 de circulation est constamment fermée quelle que soit la position angulaire occupée par le disque 20 pour réguler la troisième voie V3.

Dans l'exemple d'application de la vanne 10 à un circuit de recirculation des gaz d'échappement avec une deuxième voie V2 destinée à réaliser une fonction « EHR », le choix de l'un ou l'autre des modes de fonctionnement permet de commander cette fonction, en ouvrant ou en fermant la circulation des gaz d'échappement vers l'échangeur thermique.

Le disque 20 formant l'organe de commande de la vanne 10 comporte une première partie associée au premier mode de fonctionnement et une deuxième partie associée au deuxième mode de fonctionnement.

Dans l'exemple de réalisation, le disque 20 est divisé en deux moitiés qui, respectivement référencées 20A et 20B, constituent la première partie associée au premier mode de fonctionnement et la deuxième partie associée au deuxième mode de fonctionnement.

En variante, le disque 20 pourrait être divisé en une première partie et une deuxième partie qui ne soient pas deux parties égales, c'est-à-dire une moitié du disque.

Les deux moitiés 20A et 20B du disque 20 sont délimitées par un plan M de référence représenté sur la figure 5.

Le disque 20 est entraîné sélectivement en rotation par les moyens d'entraînement de la vanne 10 formé par le moteur 18 pour agencer sélectivement l'une ou l'autre des moitiés 20A, 20B, dans une disposition dite « active » qui est définie par rapport à l'agencement des deuxième et troisième voies V2 et V3 de circulation du fluide.

Lorsque la vanne 10 doit être utilisée dans le premier mode de fonctionnement, la première moitié 20A du disque est alors amenée par le moteur 18 dans ladite disposition active telle qu'illustrée par les figures 7 à 9.

Lorsque la vanne 10 doit être utilisée dans le deuxième mode de fonctionnement, la deuxième moitié 20A du disque est alors amenée par le moteur 18 dans ladite disposition active telle qu'illustrée par les figures 10 à 12.

Le changement de mode de fonctionnement de la vanne 10 est obtenu par une rotation de 180° du disque 20 afin de disposer sélectivement, dans ladite disposition active, la première moitié 20A ou la deuxième moitié 20B du disque 20 selon que la vanne 10 est utilisée dans le premier mode de fonctionnement ou le deuxième mode de fonctionnement.

Tel qu'illustré sur les figures 4 et 5, la première moitié 20A et la deuxième moitié 20B du disque 20 comportent chacune un secteur de circulation et au moins un secteur d'obturation qui sont respectivement configurés pour commander, dans ladite disposition active, la circulation du fluide.

La première moitié 20A du disque comporte un secteur 44 de circulation et un secteur 46 d'obturation.

Le secteur 44 de circulation de la première moitié 20A du disque 20 est délimité circonférentiellement de part et d'autre par une arête du bord 38, respectivement une arête 48 et une arête 50.

Dans l'exemple de réalisation des figures 4 et 5, l'arête 48 et l'arête 50 délimitant le secteur 44 de circulation de la première moitié 20A du disque 20 s'étendent suivant un profil rectiligne, verticalement droit.

En variante, le profil de l'arête pourrait présenter une forme géométrique différente par exemple curviligne ou suivant une ligne brisée, comme cela sera expliqué ultérieurement en référence aux figures 13 et 14.

Lorsque la première moitié 20A du disque 20 occupe la disposition active déterminée par rapport aux deuxième et troisième voies V2 et V3, l'arête 50 constitue alors une arête dite « de régulation ».

Dans le premier mode de circulation par exemple, la deuxième voie V2 demeurant constamment ouverte, c'est l'arête 50 de régulation qui participe à la régulation du débit de la troisième voie V3 de circulation du fluide car, en fonction de la position angulaire du disque 20, son profil détermine - en combinaison avec l'orifice 35 - la section de passage du fluide.

De manière analogue, la deuxième moitié 20B du disque comporte un secteur 52 de circulation et au moins un secteur d'obturation, ici deux secteurs d'obturation qui sont séparés par ledit secteur 52 de circulation.

La deuxième moitié 20B comporte un premier secteur 54 d'obturation pour fermer en permanence la deuxième voie V2 et un deuxième secteur 56 d'obturation pour fermer sélectivement la troisième voie V3 régulée.

Le secteur 52 de circulation de la deuxième moitié 20B du disque 20 est délimité circonférentiellement de part et d'autre par une arête du bord 38, respectivement une arête 58 et une arête 60.

Dans l'exemple de réalisation des figures 4 et 5, l'arête 58 et l'arête 60 délimitant le secteur 52 de circulation de la deuxième moitié 20B du disque 20 s'étendent suivant un profil rectiligne, verticalement droit.

Lorsque la deuxième moitié 20B du disque 20 occupe la disposition active déterminée par rapport aux deuxième et troisième voies V2 et V3, l'arête 60 constitue alors une arête dite « de régulation » pour réguler la troisième voie V3 de circulation du fluide.

L'arête 60 de régulation est située entre le secteur 52 de circulation et le deuxième secteur 56 d'obturation.

Dans le deuxième mode de fonctionnement, l'arête 60 de régulation participe à la régulation du débit de la troisième voie V3 de circulation du fluide à l'instar de l'arête 50 de régulation dans le premier mode de fonctionnement.

Dans le deuxième mode de circulation, le débit de la troisième voie V3 est susceptible d'être régulé en agissant sur la position angulaire du disque 20, ladite troisième voie V3 est totalement ouverte lorsque le secteur 52 de circulation est positionné radialement en coïncidence avec l'orifice 35 ou fermée lorsque le deuxième secteur 56 d'obturation est positionné radialement en coïncidence avec l'orifice 35.

On décrira ci-après en référence aux figures 7 à 9 le premier mode de fonctionnement de la vanne 10 dans lequel la deuxième voie V2 de circulation est en permanence maintenue totalement ouverte à la circulation du fluide pendant que, simultanément, la circulation du fluide à travers la troisième voie V3 de circulation est régulée par la moitié 20A du disque 20.

En maintenant à l'état d'ouverture la deuxième voie V2, il y a une circulation permanente de fluide au travers de l'échangeur thermique dédié à l'EHR. La vanne est ainsi dans un mode de fonctionnement dit « hiver » pour lequel le besoin en EHR est maximal.

Sur les figures 7 à 9 correspondant à ce premier mode de fonctionnement, c'est la première moitié 20A du disque 20 qui est amenée au voisinage des deuxième et troisième voies V2 et V3 afin d'occuper ladite disposition active.

L'autre moitié 20B du disque 20 située diamétralement à l'opposé n'est alors pas utilisée fonctionnellement. En effet, dans le premier mode de fonctionnement, la deuxième moitié 20B est dans une disposition inactive.

Le secteur 44 de circulation de la première moitié 20A est configuré pour que la deuxième voie V2 demeure en permanence ouverte à la circulation du fluide lorsque le secteur 46 d'obturation complémentaire est entraîné en rotation pour réguler la circulation à travers la troisième voie V3.

Tel qu'illustré successivement sur les figures 7 à 9, le secteur 46 d'obturation est pour ce faire susceptible d'occuper en outre une position extrême de fermeture, au moins une position intermédiaire de régulation et une position extrême d'ouverture.

Quelle que soit parmi ces positions la position angulaire occupée par le secteur 46 d'obturation, le secteur 44 de circulation assure, par sa configuration, le fait que la deuxième voie V2 demeure constamment ouverte.

Le secteur 44 de circulation de la première moitié 20A présente un angle (α) dont la valeur est notamment déterminée en fonction de l'angle compris entre la deuxième voie V2 et la troisième voie V3 et en fonction de l'angle correspondant à la course entre les positions extrême de fermeture et d'ouverture.

La deuxième voie V2 et la troisième voie V3 étant agencées orthogonalement l'une par rapport à l'autre, la valeur de l'angle (α) du secteur 44 de circulation de la première moitié 20A est ici supérieure à 90°.

La valeur minimale de l'angle (α) du secteur 44 de circulation de la première moitié 20A est déterminée par la position extrême d'ouverture du secteur 46 d'obturation qui, représentée sur la figure 9, correspond à la position déterminante à considérer pour garantir constamment une ouverture totale de la deuxième voie V2 de circulation, indépendamment de la régulation du fluide effectuée pour la troisième voie V3.

La figure 7 représente la moitié 20A du disque 20 dans une position angulaire dans laquelle le secteur 46 d'obturation occupe ladite position extrême de fermeture.

En position extrême de fermeture, le secteur 46 d'obturation est placé en vis-à-vis de l'orifice 35 de la troisième voie V3 de sorte que le fluide ne peut y circuler.

L'arête 50 de régulation située à la jonction du secteur 44 de circulation et du secteur 46 d'obturation est agencée, dans cette position extrême de fermeture, au voisinage de l'orifice 35 de la troisième voie V3, du côté qui est le plus proche de la deuxième voie V2.

Comme on peut le voir sur la figure 7 avec les flèches, en position extrême de fermeture de la troisième voie V3 par le secteur 46 d'obturation, le fluide admis dans la vanne 10 en entrée par la première voie V1 (en permanence ouverte) s'écoule alors uniquement en sortie à travers la deuxième voie V2 de circulation.

La figure 8 représente la moitié 20A du disque 20 dans une autre position angulaire dans laquelle le secteur 46 d'obturation occupe l'une des positions intermédiaires de régulation située entre ladite position extrême de fermeture illustrée par la figure 7 et la position extrême d'ouverture illustrée par la figure 9.

L'entraînement du disque 20 par le moteur 18 autour de l'axe O suivant le sens horaire provoque le déplacement du secteur 46 d'obturation de la position extrême de fermeture vers la position extrême d'ouverture, c'est-à-dire une ouverture de la circulation du fluide à travers la troisième voie V3.

Inversement, l'entraînement du disque 20 par le moteur 18 autour de l'axe O suivant le sens antihoraire provoque la fermeture de la circulation du fluide à travers la troisième voie V3.

La position intermédiaire de régulation représentée sur la figure 8 est ici à mi-course entre ladite position extrême de fermeture et la position extrême d'ouverture. Cette position intermédiaire de régulation entre 0 et 100% de la circulation du fluide correspond ainsi à une circulation du fluide avec un débit de 50% vers la troisième voie V3.

L'arête 50 de régulation présentant un profil verticalement rectiligne divise alors en deux la section circulaire de passage de l'orifice 35.

Sur la figure 8, le secteur 46 d'obturation étant en position intermédiaire de régulation, le fluide admis en entrée de la vanne 10 par la première voie V1 (en permanence ouverte) s'écoule alors, d'une part, à travers la deuxième voie V2 de circulation et, d'autre part, à travers la troisième voie V3 avec un débit déterminé par la position intermédiaire du secteur 46 d'obturation.

La figure 9 représente la moitié 20A du disque 20 dans une position angulaire dans laquelle le secteur 46 d'obturation occupe ladite position extrême d'ouverture.

En position extrême d'ouverture, le secteur 46 d'obturation est décalé angulairement par rapport à l'orifice 35 de la troisième voie V3 pour ne plus se trouver radialement en coïncidence avec celui-ci, de manière que le fluide soit libre circuler vers la troisième voie V3.

L'arête 50 de régulation située à la jonction du secteur 44 de circulation et du secteur 46 d'obturation est agencée, dans cette position extrême d'ouverture, du côté diamétralement opposé de l'orifice 35 par comparaison à celle occupée en position extrême de fermeture.

La course d'ouverture (ou de fermeture) pour ouvrir totalement la circulation du fluide à travers la troisième voie V3 correspond à un angle (θ) qui est déterminé par les caractéristiques géométriques de l'orifice 35.

La course d'ouverture (ou réciproquement pour la fermeture) correspond au passage du secteur 46 d'obturation de la position extrême de fermeture (figure 7) vers la position extrême d'ouverture (figure 9), la valeur de l'angle (θ) peut par exemple être déterminée en considérant l'arête 50 de régulation comme référence.

Dans le mode de réalisation, l'angle (α) du secteur de circulation de la moitié 20A du disque présente ainsi une valeur qui correspond au moins à la somme de l'angle (θ) avec l'angle entre les voies V2 et V3 qui est ici égal à 90°.

On décrira ci-après en référence aux figures 10 à 12 le deuxième mode de fonctionnement de la vanne 10 dans lequel la deuxième voie V2 de circulation est en permanence maintenue fermée à la circulation du fluide pendant que, simultanément, la circulation du fluide à travers la troisième voie V3 de circulation est régulée par la moitié 20B du disque 20.

En maintenant à l'état de fermeture la deuxième voie V2, il n'y a pas de circulation de fluide au travers de l'échangeur thermique dédié à l'EHR. La vanne est ainsi dans un mode de fonctionnement dit « été » pour lequel le besoin en EHR est nul. Sur les figures 10 à 12 correspondant à ce deuxième mode de fonctionnement, la deuxième moitié 20B est amenée au voisinage des deuxième voie V2 et troisième voie V3 afin d'occuper ladite disposition active.

Tel qu'indiqué précédemment, le changement entre les deux modes de fonctionnement est obtenu par une rotation de 180° du disque 20 pour amener la deuxième moitié 20B en disposition active, à la place de la première moitié 20A qui lui succède en disposition inactive jusqu'au prochain changement de mode de fonctionnement.

Pour ce deuxième mode de fonctionnement, la deuxième moitié 20B du disque 20 est configurée de la manière suivante.

Le secteur 52 de circulation de la deuxième moitié 20B est configuré pour permettre de réguler la circulation du fluide à travers la troisième voie V3, tout particulièrement pour permettre d'ouvrir totalement la troisième voie V3 de circulation de fluide.

Le secteur 52 de circulation s'étend au moins suivant un angle au moins égal à l'angle (β) dès lors qu'il est déterminé par rapport à l'orifice 35 de la troisième voie V3, en particulier ici son diamètre.

Dans l'exemple, la valeur de l'angle (β) est sensiblement égale à celle de l'angle (θ) précité correspondant à la course d'ouverture et de fermeture de la troisième voie V3, chacun étant déterminé en fonction des caractéristiques géométriques de l'orifice 35.

Le deuxième secteur 56 d'obturation de la deuxième moitié 20B est configuré pour permettre de réguler la circulation du fluide à travers la troisième voie V3, plus particulièrement pour permettre de fermer totalement la troisième voie V3 de circulation de fluide.

Le deuxième secteur 56 d'obturation s'étend également suivant au moins ce même angle (β) déterminé par rapport à l'orifice 35 afin de pouvoir fermer totalement la troisième voie V3.

Le premier secteur 54 de circulation est configuré pour fermer constamment la deuxième voie V2 de circulation du fluide.

Le premier secteur 54 de circulation s'étend angulairement de manière à fermer l'orifice 34 de la deuxième voie V2 lorsque la moitié 20B du disque 20 est déplacée suivant une course d'ouverture (ou de fermeture) pour positionner sélectivement en coïncidence avec l'orifice 35 soit le deuxième secteur 56 d'obturation, soit le secteur 52 de circulation.

Tel qu'illustré successivement sur les figures 10 à 12, le deuxième secteur 56 d'obturation est susceptible d'occuper une position extrême de fermeture, au moins une position intermédiaire de régulation et une position extrême d'ouverture.

La figure 10 représente la moitié 20B du disque 20 dans une position angulaire dans laquelle le deuxième secteur 56 d'obturation occupe une position extrême de fermeture.

En position extrême de fermeture, le deuxième secteur 56 d'obturation est placé radialement en vis-à-vis de l'orifice 35 de la troisième voie V3 de sorte que ladite voie V3 est fermée à la circulation du fluide.

La deuxième voie V2 étant fermée par le premier secteur 54 d'obturation et la troisième voie V3 étant fermée par le deuxième secteur 56 d'obturation, il n'y a alors aucune circulation de fluide à travers la vanne 10.

La figure 11 représente la moitié 20B du disque 20 dans une position angulaire dans laquelle le deuxième secteur 56 d'obturation occupe l'une des positions intermédiaires de régulation comprise angulairement entre la position extrême de fermeture illustrée par la figure 10 et la position extrême d'ouverture illustrée par la figure 12.

L'entraînement du disque 20 par le moteur 18 autour de l'axe O suivant le sens horaire provoque le déplacement du deuxième secteur 56 d'obturation de la position extrême de fermeture vers la position extrême d'ouverture, c'est-à-dire provoque une ouverture de la circulation du fluide à travers la troisième voie V3 comme l'illustre la flèche sur la figure 11.

Inversement, l'entraînement du disque 20 par le moteur 18 autour de l'axe O suivant le sens antihoraire provoque la fermeture de la circulation du fluide à travers la troisième voie V3.

La position intermédiaire de régulation représentée sur la figure 11 est ici à mi-course entre ladite position extrême de fermeture et la position extrême d'ouverture. Cette position intermédiaire de régulation entre 0 et 100% de la circulation du fluide correspond ainsi à une circulation du fluide avec un débit de 50% vers la troisième voie V3.

L'arête 60 de régulation que comporte le bord 38 présentant un profil verticalement rectiligne divise alors en deux la section circulaire de passage de l'orifice 35.

Sur la figure 11, le deuxième secteur 56 d'obturation étant en position intermédiaire de régulation, le fluide admis en entrée de la vanne 10 par la première voie V1 (en permanence ouverte) s'écoule alors à travers la troisième voie V3 avec un débit plus ou moins important que détermine la position intermédiaire du deuxième secteur 56 d'obturation.

La figure 12 représente la deuxième moitié 20B du disque 20 dans une position angulaire dans laquelle le deuxième secteur 56 d'obturation occupe ladite position extrême d'ouverture.

En position extrême d'ouverture, le deuxième secteur 56 d'obturation est décalé angulairement par rapport à l'orifice 35 de la troisième voie V3.

Le secteur 52 de circulation, adjacent au deuxième secteur 56 d'obturation, se positionne alors en coïncidence avec l'orifice 35 de sorte que le fluide puisse circuler vers la troisième voie V3 totalement ouverte.

Au cours de la course d'ouverture de la troisième voie V3 qui vient d'être décrite en référence aux figures 10 à 12, l'arête 60 de régulation du bord 38 située dans la deuxième moitié 20B passe d'un côté de l'orifice 35 à l'autre côté, diamétralement opposé.

Les figures 13 a, b et c sont des vues en perspective qui, analogues à la figure 4, représentent de manière non limitative d'autres exemples de profil d'une arête de régulation.

Chacune de ces variantes de profil est susceptible s'appliquer à l'arête 50 de régulation du secteur 44 d'obturation de la première moitié 20A et/ou à l'arête 60 de régulation du deuxième secteur 56 d'obturation de la deuxième moitié 20B du disque.

Tel qu'illustré sur la figure 4, l'arête 50 de régulation et l'arête 60 de régulation présentent un profil identique, à savoir verticalement droit ou rectiligne, mais ce profil pourrait être différent en particulier puisque chacune de ces arêtes intervient dans un mode de fonctionnement différent de la vanne 10.

En effet, l'arête 50 de régulation du secteur 44 d'obturation de la première moitié 20A est utilisée dans le premier mode de fonctionnement tandis que l'arête 60 de régulation du deuxième secteur 56 d'obturation de la deuxième moitié 20B est utilisée dans le deuxième mode de fonctionnement.

La figure 13a représente une arête 70 de régulation présentant un profil en biseau, l'arête s'étendant de manière rectiligne mais obliquement par rapport à l'orientation verticale.

La figure 13b représente une arête 80 de régulation présentant un profil comportant deux biseaux de sens opposé, respectivement un premier biseau 82 et un deuxième biseau 84, ledit profil correspondant à la forme d'un accent circonflexe.

Le premier biseau 82 est rentre dans le bord 38 du disque 20 puis, par exemple ici à la moitié de la hauteur dudit bord 38, le deuxième biseau 84 repart dans la direction opposée, vers le secteur de circulation adjacent.

La figure 13c représente une arête 90 de régulation présentant un profil comportant une arête 92 droite qui s'étend verticalement puis un biseau 94 qui s'étend obliquement jusqu'au voisinage de la paroi 36 du disque 20.

Ainsi qu'on l'aura compris, le profil de l'arête de régulation peut prendre de multiples formes géométriques, y compris curviligne.

Le profil d'arête de régulation est avantageusement déterminée par calcul afin d'être optimisé.

Le profil est déterminé en utilisant une fonction mathématique afin que la section d'ouverture, pour un angle de rotation donné, corresponde exactement aux points de fonctionnement moteur souhaités, tel qu'un point de fonctionnement établi selon deux paramètres que sont le régime moteur et la charge moteur, par exemple ceux d'un moteur à combustion interne dans le cas de l'application de la vanne 10 à un circuit de recirculation des gaz d'échappement.

Ainsi, le graphe obtenu en représentant l'angle de rotation du disque en fonction de la section de passage du fluide n'est pas une droite.

Pour illustrer les variations obtenues en modifiant le profil d'une arête de régulation, on en a représenté graphiquement sur la figure 14 sur laquelle l'axe (x) horizontal des abscisses correspond à la section de passage du fluide et l'axe (y) vertical des ordonnées correspond à l'angle de rotation du disque.

Plus précisément, les différentes courbes identifiées a, b et c correspondent respectivement au profil de l'arête de régulation représentée sur les figures 13 a, b, c et pour la courbe d à celui de la figure 4.

Tel qu'indiqué précédemment, la vanne 10 selon le mode de réalisation qui vient d'être décrit est avantageusement utilisée dans un circuit (non représenté) de recirculation des gaz d'échappement d'un moteur à combustion interne de véhicule automobile.

On rappelle que le principe de la recirculation des gaz d'échappement ou « EGR » consiste à introduire à l'admission du moteur un mélange formé d'air frais et d'une partie des gaz d'échappement. Il est fréquemment utilisé dans les moteurs à combustion suralimentés, Diesel ou essence, en raison des objectifs de performances et de dépollution recherchés.

En effet, la recirculation des gaz d'échappement permet de limiter les émissions de NOx (à proportion de la fraction des gaz d'échappement recyclés) mais réduit toutefois les performances du moteur.

On distingue dans l'état de la technique deux conceptions de circuit de recirculation des gaz d'échappement, d'une part la recirculation « à haute pression / HP » et, d'autre part, la recirculation « à basse pression / BP ».

La recirculation à basse pression consiste à prélever les gaz d'échappement après la turbine, en aval du filtre à particules, pour les réinjecter en amont du compresseur d'air de suralimentation (en variante en amont du refroidisseur d'air de suralimentation situé en aval du compresseur) tandis que la recirculation à haute pression consiste à prélever les gaz d'échappement en amont de la turbine pour les réinjecter en aval du compresseur.

Le refroidissement de l'air de suralimentation prévu dans un circuit de recirculation des gaz d'échappement, dit EGR, des moteurs actuels (Diesel ou à allumage commandé) est par exemple assuré par un ou des échangeurs thermique.

En effet, le refroidissement de l'air en augmente avantageusement la densité permettant alors d'injecter plus de carburant, au bénéfice final d'un meilleur mélange et par conséquent l'obtention de meilleures performances du moteur.

Quelle que soit sa conception HP ou BP, le circuit de recirculation des gaz d'échappement comporte au moins une conduite de recirculation dont une extrémité est reliée à un circuit d'échappement du moteur et dont une autre extrémité est reliée à un circuit d'admission du moteur.

Avantageusement, la vanne 10 selon l'invention est agencée dans ladite au moins une conduite de recirculation du circuit de recirculation des gaz d'échappement ou conduite « EGR » de manière que la première voie V1 formant une entrée soit reliée à l'échappement tandis que la troisième voie V3 régulée soit reliée à l'admission du moteur.

Selon un exemple d'application, le circuit de recirculation des gaz d'échappement comporte au moins une autre conduite pour réaliser une fonction « EHR ».

L'autre conduite « EHR » comporte alors une extrémité reliée à la deuxième voie V2 commandée en coupure (on/off) et une autre extrémité reliée à un échangeur thermique afin de réaliser un transfert de calories des gaz d'échappement vers du liquide (de refroidissement).

La vanne 10 est alors agencée dans le circuit de recirculation pour que la première voie V1 d'entrée des gaz d'échappement soit reliée à l'échappement du moteur et les voies V2 et V3 de sortie respectivement reliées à la conduite EHR et à la conduite EGR.

## Revendications

1. Vanne (10) pour un circuit de fluide de type d'un circuit de recirculation de gaz d'échappement d'un moteur à combustion interne, comportant un corps (12) constitué d'au moins un premier carter (14) auquel est reliée une première voie (V1) de circulation du fluide, un deuxième carter (16) auquel sont reliées une deuxième voie (V2) de circulation du fluide et une troisième voie (V3) de circulation du fluide et dans lequel un organe (20) de commande, monté de manière étanche, est entraîné en rotation autour d'un axe (O) pour occuper différentes positions afin de commander la circulation du fluide entre la première voie (V1) et les deuxième et troisième voies (V2, V3) de circulation du fluide, la première voie (V1) de circulation étant en permanence ouverte à la circulation du fluide, l'organe (20) de commande étant un disque comportant au moins :
- une première partie (20A) qui, associée à un premier mode de fonctionnement de la vanne, est configurée pour ouvrir constamment la circulation du fluide à travers la deuxième voie (V2) de circulation et pour réguler, simultanément, la circulation du fluide à travers la troisième voie (V3) de circulation et
- une deuxième partie (20B) qui, associée à un deuxième mode de fonctionnement de la vanne, est configurée pour fermer constamment la circulation du fluide à travers la deuxième voie (V2) de circulation et pour réguler, simultanément, la circulation du fluide à travers la troisième voie (V3) de circulation, **caractérisée en ce que** la première voie (V1) de la vanne (10) se raccorde radialement au niveau d'un bord (25) du premier carter, dit carter inférieur, soit orthogonalement à l'axe (O) de rotation, la deuxième voie (V2) et la troisième voie (V3) de circulation du fluide se raccordent radialement au bord (27) du deuxième carter (16), dit carter supérieur, soit orthogonalement à l'axe (O) de rotation, **et en ce que** le disque (20) comporte une paroi (36) qui s'étend horizontalement dans un plan (L, T) et un bord (38) cylindrique qui, à partir de la périphérie radiale externe de la paroi (36), s'étend verticalement vers le bas, le bord (38) cylindrique du disque (20) comporte une surface (40) externe de telle sorte que l'étanchéité est assurée par un contact latéral ajusté entre une surface (30) interne du deuxième carter (16) et la surface (40) externe de l'organe (20) de commande.

2. Vanne selon la revendication 1, **caractérisée en ce que** la première partie (20A) est formée par une moitié du disque (20) et la deuxième partie (20B) formée par l'autre moitié du disque (20).

3. Vanne selon la revendication 1 ou 2, **caractérisée en ce que** le disque (20) est entraîné en rotation par des moyens (18) d'entraînement pour amener sélectivement, dans une disposition active définie par rapport à l'agencement des deuxième et troisième voies (V2, V3) de circulation du fluide, ladite première partie (20A) du disque (20) lorsque la vanne (10) est utilisée dans le premier mode de fonctionnement ou ladite deuxième partie (20B) du disque (20) lorsque la vanne (10) est utilisée dans le deuxième mode de fonctionnement.

4. Vanne selon la revendication 3, **caractérisée en ce que** la première partie (20A) du disque (20) comporte un secteur (44) de circulation et un secteur (46) d'obturation respectivement configurés pour commander la circulation du fluide lorsque, dans le premier mode de fonctionnement de la vanne (10), la première partie (20A) est en disposition active.

5. Vanne selon la revendication 4, **caractérisée en ce que** le secteur (44) de circulation de la première partie (20A) s'étend angulairement suivant un angle (α) dont la valeur est déterminée pour ouvrir totalement la circulation du fluide à travers la deuxième voie (V2) lorsque le secteur (46) d'obturation complémentaire de la première partie (20A) est entraîné en rotation entre au moins une position extrême de fermeture et une position extrême d'ouverture pour réguler la circulation du fluide dans la troisième voie (V3).

6. Vanne selon la revendication 5, **caractérisée en ce que** la valeur de l'angle (α) du secteur (44) de circulation de la première partie (20A) du disque (20) est supérieure à la valeur de l'angle compris entre la deuxième voie (V2) et la troisième voie (V3).

7. Vanne selon la revendication 3, **caractérisée en ce que** la deuxième partie (20B) du disque (20) comporte un secteur (52) de circulation interposé entre un premier secteur (54) d'obturation et un deuxième secteur (56) d'obturation, lesdits secteurs de circulation et d'obturation étant respectivement configurés pour commander la circulation du fluide lorsque, dans le deuxième mode de fonctionnement de la vanne (10), la deuxième partie (20B) est en disposition active.

8. Vanne selon la revendication 7, **caractérisée en ce que** le premier secteur (54) d'obturation est configuré pour fermer la circulation du fluide à travers la deuxième voie (V2) lorsque le deuxième secteur (56) d'obturation est entraîné en rotation entre une position extrême de fermeture et une position extrême d'ouverture pour réguler la circulation du fluide dans la troisième voie (V3).

9. Circuit de recirculation des gaz d'échappement d'un moteur à combustion interne de véhicule automobile comportant au moins une conduite de recirculation d'au moins une partie des gaz d'échappement dont une extrémité est reliée à un circuit d'échappement du moteur et dont une autre extrémité est reliée à un circuit d'admission du moteur, **caractérisé en ce que** ladite conduite de recirculation du circuit comporte au moins une vanne (10) selon l'une quelconque des revendications précédentes.

## Patentansprüche

1. Ventil (10) für einen Fluidkreislauf des Typs eines Rezirkulationskreislaufs von Abgas eines Verbrennungsmotors, umfassend einen Körper (12), der aus mindestens einem ersten Gehäuse (14), mit dem ein erster Fluidzirkulationskanal (V1) verbunden ist, einem zweiten Gehäuse (16), mit dem ein zweiter Fluidzirkulationskanal (V2) und ein dritter Fluidzirkulationskanal (V3) verbunden sind, besteht, und wobei ein Steuerelement (20), das dicht montiert ist, zum Einnehmen unterschiedlicher Positionen um eine Achse (O) rotierend angetrieben wird, um die Fluidzirkulation zwischen dem ersten Fluidzirkulationskanal (V1) und dem zweiten und dritten Fluidzirkulationskanal (V2, V3) zu steuern,
wobei der erste Zirkulationskanal (V1) für die Fluidzirkulation permanent offen ist, wobei das Steuerelement (20) eine Scheibe ist, die mindestens umfasst:
- einen ersten Teil (20A), der, verknüpft mit einem ersten Betriebsmodus des Ventils, zum ständigen Öffnen der Fluidzirkulation durch den zweiten Zirkulationskanal (V2) und zum gleichzeitigen Regeln der Fluidzirkulation durch den dritten Zirkulationskanal (V3) konfiguriert ist, und
- einen zweiten Teil (20B), der, verknüpft mit einem zweiten Betriebsmodus des Ventils, zum ständigen Schließen der Fluidzirkulation durch den zweiten Zirkulationskanal (V2) und zum gleichzeitigen Regeln der Fluidzirkulation durch den dritten Zirkulationskanal (V3) konfiguriert ist, **dadurch gekennzeichnet, dass** der erste Kanal (V1) des Ventils (10) in Bezug auf einen Rand (25) des ersten Gehäuses, genannt das untere Gehäuse, radial angeschlossen ist, also orthogonal zu der Rotationsachse (O) des zweiten Kanals (V2), und der dritte Fluidzirkulationskanal (V3) an den Rand (27) des zweiten Gehäuses (16), genannt das obere Gehäuse, radial angeschlossen ist, also orthogonal zu der Rotationsachse (O), und **dass** die Scheibe (20) eine Wand (36), die sich in einer Ebene (L, T) horizontal erstreckt, und einen zylindrischen Rand (38), der sich von dem äußeren radialen Umfang der Wand (36) vertikal nach unten erstreckt, umfasst, wobei der zylindrische Rand (38) der Scheibe (20) eine Außenoberfläche (40) umfasst, derart, dass die Dichtheit durch einen eingestellten seitlichen Kontakt zwischen einer Innenoberfläche (30) des zweiten Gehäuses (16) und der Außenoberfläche (40) des Steuerelements (20) gewährleistet ist.

2. Ventil nach Anspruch 1, **dadurch gekennzeichnet, dass** der erste Teil (20A) aus einer Hälfte der Scheibe (20) ausgebildet wird und der zweite Teil (20B) aus der anderen Hälfte der Scheibe (20) ausgebildet wird.

3. Ventil nach Anspruch 1 oder 2, **dadurch gekennzeichnet, dass** die Scheibe (20) durch Antriebsmittel (18) zum selektiven Lenken in einer aktiven Verfassung, die relativ zu der Anordnung des zweiten Fluidzirkulationskanals und des dritten Fluidzirkulationskanals (V2, V3) definiert ist, des ersten Teils (20A) der Scheibe (20), wenn das Ventil (10) in dem ersten Betriebsmodus verwendet wird, oder des zweiten Teils (20B) der Scheibe (20), wenn das Ventil (10) in dem zweiten Betriebsmodus verwendet wird, rotierend angetrieben wird.

4. Ventil nach Anspruch 3, **dadurch gekennzeichnet, dass** der erste Teil (20A) der Scheibe (20) einen Zirkulationsbereich (44) und einen Abdichtungsbereich (46) umfasst, die jeweils zum Steuern der Fluidzirkulation konfiguriert sind, wenn, in dem ersten Betriebsmodus des Ventils (10), der erste Teil (20A) in aktiver Verfassung ist.

5. Ventil nach Anspruch 4, **dadurch gekennzeichnet, dass** sich der Zirkulationsbereich (44) des ersten Teils (20A) einem Winkel (α) folgend winkelig erstreckt, dessen Wert zum vollständigen Öffnen der Fluidzirkulation durch den zweiten Kanals (V2) bestimmt wird, wenn der Abdichtungsbereich (46), der komplementär zu dem ersten Teil (20A) ist, zwischen mindestens einer extremen Schließposition und einer extremen Öffnungsposition zum Regeln der Fluidzirkulation in dem dritten Kanal (V3) rotierend angetrieben wird.

6. Ventil nach Anspruch 5, **dadurch gekennzeichnet, dass** der Wert des Winkels (α) des Zirkulationsbereichs (44) des ersten Teils (20A) der Scheibe (20) größer als der Wert des Winkels zwischen dem zweiten Kanal (V2) und dem dritten Kanal (V3) ist.

7. Ventil nach Anspruch 3, **dadurch gekennzeichnet, dass** der zweite Teil (20B) der Scheibe (20) einen Zirkulationsbereich (52) umfasst, der zwischen einem ersten Abdichtungsbereich (54) und einem zweiten Abdichtungsbereich (56) liegt, wobei die Zirkulationsbereiche und die Abdichtungsbereiche jeweils zum Steuern der Fluidzirkulation konfiguriert sind, wenn, in dem zweiten Betriebsmodus des Ventils (10), der zweite Teil (20B) in aktiver Verfassung ist.

8. Ventil nach Anspruch 7, **dadurch gekennzeichnet, dass** der erste Abdichtungsbereich (54) zum Schließen der Fluidzirkulation durch den zweiten Kanal (V2) konfiguriert ist, wenn der zweite Abdichtungsbereich (56) zwischen einer extremen Schließposition und einer extremen Öffnungsposition zum Regeln der Fluidzirkulation in dem dritten Kanal (V3) rotierend angetrieben wird.

9. Rezirkulationskreislauf von Abgasen eines Verbrennungsmotors eines Kraftfahrzeugs, umfassend mindestens eine Rezirkulationsleitung mindestens eines Teils der Abgase, deren eines Ende mit einem Auspuffkreislauf des Motors verbunden ist und deren anderes Ende mit einem Einlasskreislauf des Motors verbunden ist, **dadurch gekennzeichnet, dass** die Rezirkulationsleitung des Kreislaufs mindestens ein Ventil (10) nach einem der vorstehenden Ansprüche umfasst.

## Claims

1. Valve (10) for a fluid circuit, of the type of an exhaust gas recirculation circuit of an internal combustion engine, comprising a body (12) consisting of at least a first casing (14) to which a first fluid circulation path (V1) is connected, a second casing (16) to which a second fluid circulation path (V2) and a third fluid circulation path (V3) are connected and in which a sealingly mounted control member (20) is rotated about an axis (O) to occupy different positions in order to control the circulation of fluid between the first fluid circulation path (V1) and the second and third fluid circulation paths (V2, V3),
the first circulation path (V1) being permanently open to the circulation of fluid, the control member (20) being a disk comprising at least:
- a first portion (20A) which, associated with a first operating mode of the valve, is designed to constantly open the circulation of fluid through the second circulation path (V2) and to regulate, simultaneously, the circulation of fluid through the third circulation path (V3), and
- a second portion (20B) which, associated with a second operating mode of the valve, is designed to constantly shut off the circulation of fluid through the second circulation path (V2) and to regulate, simultaneously, the circulation of fluid through the third circulation path (V3), **characterized in that** the first path (V1) of the valve (10) connects radially to an edge (25) of the first casing, the so-called lower casing, i.e. orthogonally to the axis (O) of rotation, the second fluid circulation path (V2) and the third fluid circulation path (V3) connect radially to the edge (27) of the second casing (16), the so-called upper casing, i.e. orthogonally to the axis (O) of rotation, **and in that** the disk (20) comprises a wall (36) which extends horizontally in a plane (L, T) and a cylindrical edge (38) which, starting from the radial outer periphery of the wall (36), extends vertically downwards, the cylindrical edge (38) of the disk (20) has an outer surface (40) so that sealing is ensured by close-fitting lateral contact between an inner surface (30) of the second casing (16) and the outer surface (40) of the control member (20).

2. Valve according to claim 1, **characterized in that** the first portion (20A) is formed by one half of the disk (20) and the second portion (20B) is formed by the other half of the disk (20).

3. Valve according to either claim 1 or 2, **characterized in that** the disk (20) is rotated by drive means (18) to selectively bring, into an active position defined with respect to the arrangement of the second and third fluid circulation paths (V2, V3), said first portion (20A) of the disk (20) when the valve (10) is used in the first operating mode or said second portion (20B) of the disk (20) when the valve (10) is used in the second operating mode.

4. Valve according to claim 3, **characterized in that** the first portion (20A) of the disk (20) comprises a circulation sector (44) and a blocking sector (46) respectively designed to control the circulation of fluid when, in the first operating mode of the valve (10), the first portion (20A) is in the active position.

5. Valve according to claim 4, **characterized in that** the circulation sector (44) of the first portion (20A) extends angularly at an angle (α), the value of which is determined in order to fully open the circulation of fluid through the second path (V2) when the complementary blocking sector (46) of the first portion (20A) is rotated between at least a closed end position and an open end position in order to regulate the circulation of fluid in the third path (V3).

6. Valve according to claim 5, **characterized in that** the value of the angle (α) of the circulation sector (44) of the first portion (20A) of the disk (20) is greater than the value of the angle between the second path (V2) and the third path (V3).

7. Valve according to claim 3, **characterized in that** the second portion (20B) of the disk (20) comprises a circulation sector (52) interposed between a first blocking sector (54) and a second blocking sector (56), said circulation and blocking sectors being respectively designed to control the circulation of the fluid when, in the second operating mode of the valve (10), the second portion (20B) is in the active position.

8. Valve according to claim 7, **characterized in that** the first blocking sector (54) is designed to shut off the circulation of fluid through the second path (V2) when the second blocking sector (56) is rotated between a closed end position and an open end position in order to regulate the circulation of fluid in the third path (V3).

9. Exhaust gas recirculation circuit for a motor vehicle internal combustion engine, comprising at least one pipe for recirculating at least a portion of the exhaust gases, one end of which is connected to an exhaust circuit of the engine and the other end of which is connected to an intake circuit of the engine,
**characterized in that** said recirculation pipe of the circuit comprises at least one valve (10) according to any of the preceding claims.
